# EUROPEAN PATENT APPLICATION

(11) **EP 1 445 948 A1**
(43) Date of publication of application: **11.08.2004**
(21) Application number: 04300017.3
(22) Date of filing: 13.01.2004
(51) Int. Cl.: H04N 5/92

(54) **Video recorder and process for recording a digital stream**

(30) Priority: 06.02.2003 EP 03290295
(71) Applicant: Thomson Licensing S.A., 92100 Boulogne-Billancourt (FR)
(72) Inventor: Kwok, Kwong Heng, 730375 Singapore (SG); Ong, Chuan Peng, 520726 Singapore (SG)
(74) Representative: Rittner, Karsten, Dr.

(57) **Abstract**

A video recorder has a source (2) of a digital stream (MPEG) representing a video signal (CVBS) and a medium interface (6) for recording the digital stream (MPEG) as a recording among a plurality of recordings. An indicator of the video signal standard is also recorded for each recording.

When a change in the video standard is detected, a new recording is started with an indicator of the new video standard attached.

Processes for recording a digital stream are also proposed.

## Description

The invention relates to a video recorder and to a process for recording a digital stream.

Analogue video signals have long been broadcast according to several possible standards over the world, namely PAL, NTSC and SECAM. These standards differ by several features which makes it necessary to identify the standard which is used in order to correctly configure the video circuits and obtain a correct display of the video sequence.

The advent of digital technology has not removed this need. Although the video signals are digitally encoded (generally MPEG-compressed), there is still several possible video standards for the analogue video signal behind the digital stream, mainly PAL and NTSC.

Besides broadcasting, the main way to distribute video content is through pre-recorded media, as for instance DVD (Digital Versatile Disc). In order to ease recognition at the reproducer's end (DVD player) of which video standard is used for a given medium (DVD), it has already been proposed to put on the medium an information of the video standard used for video signals in this medium.

In the field of pre-recorded medium, patent application EP 0 677 843 teaches to put on the medium an information identifying the video standard (such as PAL or NTSC) for each program. This information is known by the producer of the pre-recorded medium as he determines the video standard which is used.

However, this solution does not apply in a video recorder which has to record an incoming video signal of an unknown standard.

The invention seeks to solve this problem with the prior art.

In this goal, the invention proposes a video recorder comprising a source of a digital stream representing a video signal in one of a plurality of video standards, means for recording the digital stream on a medium as a recording among a plurality of recordings and means for recording an indicator of the video standard for the recording.

According to a preferred embodiment, the video recorder comprises means for detecting the video standard of the video signal thereby generating the indicator ; preferably, the recording means automatically starts a further recording when the detecting means detects a change in the video standard.

Correspondingly, the invention proposes a process for recording a digital stream on a medium as a recording among a plurality of recordings, the digital stream representing a video signal in one of a plurality of video standards, with the step of recording an indicator of the video standard for the recording.

This process may also include the previous step of detecting the video standard of the video signal.

Preferably, these processes include the steps of :
- detecting a change in the video standard of the video signal ;
- recording the digital stream as a further recording.

Accordingly, the invention proposes a medium carrying data representing video signals, wherein the data are arranged as a plurality of recordings, and comprising for each recording an indicator of a video signal standard.

To correctly retrieve the video signals, the invention proposes a process for reproducing a digital stream representing video signals from a medium where data are arranged as a plurality of recordings, with the step of reading an indicator of the video signal standard of the recording.

Following this concept, the invention proposes a process for recording a digital stream on a medium, the digital stream representing a video signal in one of a plurality of video standards, with the steps of :
- recording the digital stream as a first recording ;
- detecting a change from a first video standard to a second video standard ;
- recording the digital stream as a second recording.

This process may also include the step of recording an indicator of the second video standard for the second recording.

Other features of the invention will appear in the following description which refers to the appended drawings, where :
- Figure 1 shows the main elements of a video recorder according to the invention ;
- Figure 2 is an operating chart of the video recorder of Figure 1.

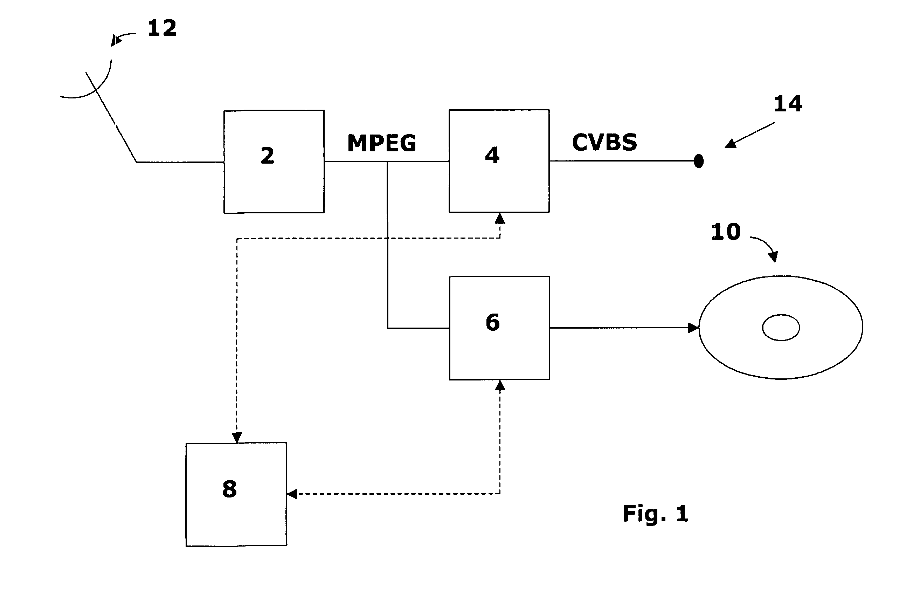

A digital video receiver and recorder is depicted on Figure 1.

A digital receiver 2 (comprising a tuner, a demodulator and a demultiplexer) generates an MPEG stream (digital video stream) based on electromagnetic signals received on an antenna 12. For the apparatus of Figure 1, the digital receiver 2 can be considered as a source of a digital stream.

The MPEG stream generated by the digital receiver 2 is transmitted on the one hand to a video processor 4 and on the other hand to a medium interface 6.

The video processor 4 has a MPEG decoder to decode the MPEG stream into a YCbCr digital stream and a video encoder to convert this YCbCr digital stream into an analogue video signal, for instance a composite video base-band signal (CVBS), to be transmitted to another apparatus through a connector 14, for instance a Cinch connector.

The medium interface 6 records the MPEG stream on a medium, for instance a recordable DVD 10.

The medium interface 6 and the video processor 4 are controlled by a microprocessor 8. For instance, the microprocessor 8 controls the medium interface 6 so that several broadcast programs received at different moment in time on various channels at antenna 12 be recorded according to user's commands as several recordings on the medium 10. (For this description, the term "recording" is preferred to the term "track" which can also be found to avoid any mistake with "physical track".)

The MPEG decoder of the video processor 4 decodes the incoming MPEG stream, and notably the video standard information provided in the current MPEG stream.

This video standard information is used by the video encoder of the video processor 4, which encodes the analogue video signal in accordance with this video standard.

The video standard information is also transmitted to the microprocessor 8. When the user requires a new recording to start, the microprocessor 8 transmits an indicator of the video standard to the medium interface 6 so that this indicator of the video standard is recorded on the medium, as information attached to the recording. The microprocessor 8 then launches recording of the MPEG stream.

While the recording takes place, the microprocessor 8 keeps on receiving the video standard information from the video processor 4. If a change in the video standard (for any reason, such as channel change by the user) is detected, the microprocessor 8 automatically controls the medium interface 6 to start a new recording and to attach an indicator of the newly-received video standard to this new recording.

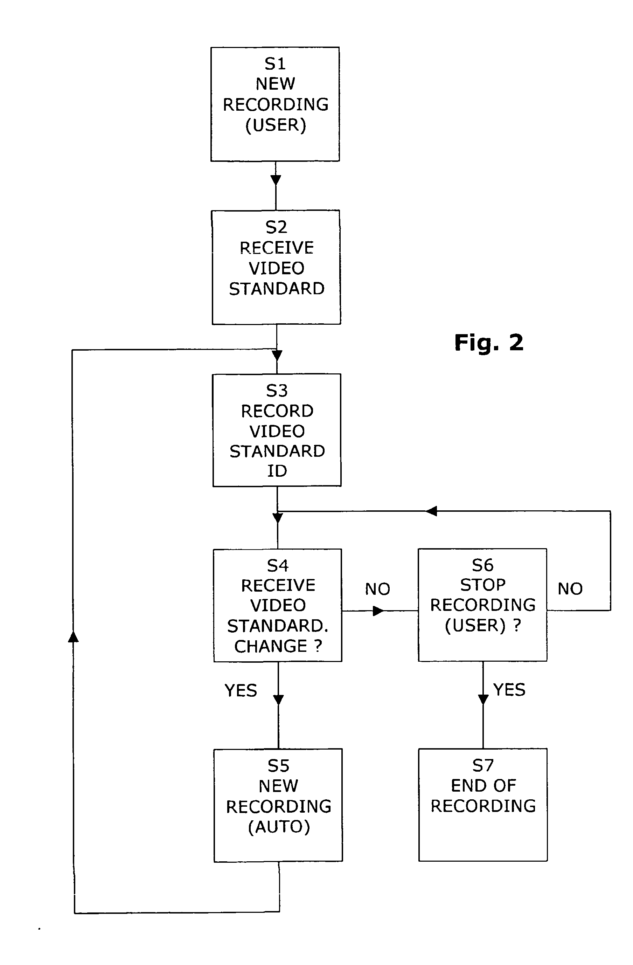

An operating chart illustrating this procedure with greater detail is shown on Figure 2.

At step S1, a new recording is started at the user's request : the microprocessor 8 controls the medium interface 6 to record the incoming MPEG stream as a new recording on the medium 10. As an example, if 5 recordings were already present on the medium, the new recording is recording 6.

During initiation of the new recording (recording 6), the microprocessor 8 receives from the video processor 4 an information regarding the video standard of the analogue signal coded in the MPEG stream (step S2). An indicator of the video standard is recorded on the medium 10 (step S3) as metadata attached to the recording. These metadata are for instance coded on two bits according to the following table.

| Detected video standard | Video standard ID (metadata to each recording) |
|---|---|
| Standard PAL (625 lines, 50 Hz) | 00 |
| Standard NTSC (525 lines, 60 Hz) | 11 |
| PAL 60 Hz (625 lines, 60 Hz) | 01 |

During the recording, the microprocessor continuously receives information on the current video standard and checks for a change in the video standard (step S4).

If there is no change in the video standard (as most often), the video recorder carries on writing the same recording (recording 6) and proceeds other steps of a waiting loop, such as testing whether a command from the user to stop the recording is received (step S6). If a stop command is received, the recording is stopped (step S7). If no stop command is received, the recording is continued and the video recorder checks again for a change in the video standard (step S4).

If a change is detected in the video standard, the microprocessor 8 controls the medium interface 6 to put an end to the current recording (recording 6) and to start a new recording, here recording 7 (step S5). Importantly, this new recording is started automatically by the video recorder, without any command from the user at this particular moment.

As metadata to this new recording (recording 7), an indicator of the new video standard (received by the microprocessor 8, here from the video processor 4) is written on the medium (step S3). The recording operation then continues on recording 7.

The invention is of course not limited to the embodiment described above. Variations are possible without departing from the scope of the invention.

For instance, the source of a digital stream can be embodied by a MPEG encoder encoding analogue signals, such as a video signal from an analogue tuner or a video signal from an input connector to be linked for instance to an external video player (*e.g*. VCR).

## Claims

1. Video recorder comprising :
- a source (2) of a digital stream (MPEG) representing a video signal in one of a plurality of video standards ;
- means for recording (6) the digital stream on a medium (10) as a recording among a plurality of recordings,
- means for recording an indicator of the video standard for the recording ;
- means for detecting (4, 8) the video standard of the video signal thereby generating the indicator.

2. Video recorder according to claim 1, wherein the recording means automatically starts a further recording when the detecting means detects a change in the video standard.

3. Process for recording a digital stream on a medium as a recording among a plurality of recordings, the digital stream representing a video signal in one of a plurality of video standards, with the steps of :
- detecting (S2, S4) the video standard of the video signal ;
- recording (S3) an indicator of the video standard for the recording.

4. Process according to claim 3, with the steps of :
- detecting (S4) a change in the video standard of the video signal ;
- recording (S5) the digital stream as a further recording.

5. Process for recording a digital stream on a medium, the digital stream representing a video signal in one of a plurality of video standards, with the steps of :
- recording (S1) the digital stream as a first recording ;
- detecting (S4) a change from a first video standard to a second video standard ;
- recording (S5) the digital stream as a second recording.

6. Process according to claim 5, with the step of :
- recording (S3) an indicator of the second video standard for the second recording.
